# EUROPEAN PATENT SPECIFICATION

(11) **EP 4 155 641 B1**
(45) Date of publication and mention of the grant of the patent: **27.05.2026**
(21) Application number: 22763533.1
(22) Date of filing: 24.02.2022
(51) Int. Cl.: F26B 5/04, F26B 25/00, F26B 15/12, H01M 4/04, F26B 21/35

(54) **VACUUM DRYING DEVICE FOR ELECTRODE IN ROLL-TO-ROLL STATE AND VACUUM DRYING METHOD THEREOF**
VAKUUMTROCKNUNGSVORRICHTUNG FÜR EINE ELEKTRODE IN ROLL-TO-ROLL-ZUSTAND UND VAKUUMTROCKNUNGSVERFAHREN DAFÜR
DISPOSITIF DE SÉCHAGE SOUS VIDE POUR ÉLECTRODE EN ÉTAT DE ROULEAU À ROULEAU ET SON PROCÉDÉ DE SÉCHAGE SOUS VIDE

(30) Priority: 03.03.2021 KR 20210027817
(43) Date of publication of application: 29.03.2023
(73) Proprietor: LG Energy Solution, Ltd., Seoul 07335 (KR)
(72) Inventor: KIM, Jin Gon, Daejeon 34122 (KR); KANG, Tae Won, Daejeon 34122 (KR); JUNG, Su Taek, Daejeon 34122 (KR); PARK, Dong Hyeuk, Daejeon 34122 (KR); BAE, Sang Ho, Daejeon 34122 (KR); JANG, Woo Sun, Daejeon 34122 (KR)
(74) Representative: Plasseraud IP
(86) International application number: PCT/KR2022/002741
(87) International publication number: WO 2022/186550

(56) References cited:
- WO-A1-2015/053391
- WO-A1-99/18403
- CN-A- 108 149 214
- CN-A- 108 258 190
- CN-A- 109 682 174
- CN-B- 103 460 405
- CN-B- 107 782 096
- CN-U- 210 261 958
- JP-A- 2007 120 777
- JP-A- 2014 107 237
- JP-A- 2021 012 829
- JP-B2- 5 984 643
- KR-A- 20150 002 074
- KR-A- 20180 069 388
- KR-B1- 101 943 268
- TW-B- I 715 803
- US-A- 5 906 055
- US-A1- 2011 091 661

## Description

### [Technical Field]

The present invention relates to a vacuum drying apparatus for vacuum-drying an electrode in a roll-to-roll state and a vacuum drying method therefor.

More particularly, the present invention relates to a vacuum drying apparatus and a vacuum drying method capable of improving the wet performance of electrodes as well as drying electrodes with a high moisture content by performing evacuation to various vacuum pressures according to set process conditions.

This application claims the benefit of priority based on Korean Patent Application No. 10-2021-0027817, filed on March 3, 2021.

### [Background Art]

With developments in technology and increases in demand for mobile devices, the demand for secondary batteries is rapidly increasing. Among secondary batteries, lithium secondary batteries are widely used as an energy source for various electronic products as well as various mobile devices because they have high energy density and operating voltage and excellent preservation and life cycle characteristics.

Lithium secondary batteries are manufactured through an electrode process of coating a positive-electrode active material and a negative-electrode active material on a positive-electrode conductor foil and a negative-electrode conductor foil, which are current collector sheets, respectively, an assembly process including notching for forming an electrode tab in an uncoated region to which the active material of the electrode is not applied; lamination of laminating the electrode and a separator to produce an electrode assembly, packaging of stacking or folding the electrode assembly, packaging the electrode assembly in pouches or cans, and injecting electrolyte, and the like, and an activation process of charging or discharging the assembled battery to impart battery characteristics

Also, the electrode is transferred and processed in a so-called roll-to-roll state in which it is laid between an unwinder and a rewinder in the electrode manufacturing process or assembly process, etc. Such a roll-type electrode sheet has high hygroscopicity because a paste-like mixture composed of an active material, a conductive material, a binder, and the like is applied to a metal foil serving as a base material. Therefore, it is necessary to remove moisture during an electrode manufacturing process.

However, when an electrode is dried in an electrode roll state, a temperature difference occurs between the inside and outside of the roll, and thus it is difficult to uniformly dry the electrode. So, a method of vacuum-drying an electrode in a roll-to-roll state has been introduced.

Meanwhile, recently, electrodes in which it is difficult to express desired battery characteristics because the moisture of the electrodes is formed to be high depending on the composition of the active material, the size of particles constituting the active material, or the like have emerged. For example, positive electrodes coated with a high-nickel positive-electrode material introduced to increase battery capacity and reduce manufacturing cost or electrodes of an active material having a small particle size structure deviate from a desired moisture specification because they are vulnerable to external environments and have a high moisture absorption rate in the atmosphere.

However, conventional electrode vacuum drying apparatuses dried electrodes by evacuating a vacuum chamber to a low vacuum level of 1 Torr or more and thus had a limitation in removing moisture from the electrodes. In particular, in the case of electrodes with a high moisture content as described above, it was difficult to sufficiently remove moisture using such a vacuum drying apparatus for performing vacuum drying at a low vacuum level.

Furthermore, even if moisture was removed to some extent, the conventional low-vacuum drying apparatuses were insufficient to improve the wet performance of electrodes. The wet performance of an electrode refers to performance in which electrolyte can be impregnated by easily permeating into the active material of the electrode when the electrode assembly is packaged in a container and the electrolyte is injected into the container. Since the wet performance of such an electrode is further improved as the electrolyte is more easily impregnated into bubbles inside the electrode, it is necessary to properly form the bubbles for the electrolyte to be impregnated in the electrode. However, the conventional low-vacuum drying apparatuses have a limitation in improving the wet performance of an electrode, in particular, the wet performance of an electrode with a high moisture content.

In order to remove moisture from electrodes and improve the performance of electrodes, it may be assumed that the electrodes are dried by evacuating a vacuum chamber with a medium-vacuum device or a high-vacuum device. However, it is not easy to evacuate the vacuum chamber from a low vacuum level to a medium-high vacuum level through a single pipe due to the structure of the vacuum equipment or pipe, and the control thereof will also be very complicated. Also, when the vacuum chamber is evacuated directly to a high vacuum level, so-called vacuum damage in which the electrode is damaged by the vacuum may occur.

Meanwhile, when the electrode is continuously vacuum-dried in the vacuum chamber, foreign substances generated from the electrode may float in the vacuum chamber or remain in the vacuum chamber. When the vacuum drying is continued in the vacuum chamber, foreign substances may be attached to the electrode of the electrode roll that is subsequently introduced into the vacuum chamber, and thus the electrode may be contaminated in the vacuum chamber.

Based on this, it is desired to develop a vacuum drying technique capable of removing moisture from electrodes and improving the wet performance of electrodes without causing vacuum damage to the electrodes.

Also, it will be desirable to develop a vacuum drying technique capable of preventing electrode contamination by effectively removing foreign substances from the vacuum chamber. For example, JP2014107237A refers to an electrode sheet drying apparatus and method, CN109682174A describes a pole piece drying box and a pole piece drying device in the context of the manufacturing of lithium batteries, and WO99/18403 refers to a rapid drying oven and methods for providing rapid drying of multiple samples.

### [Related Art Document]

### [Patent Document]

Japanese Patent No. 5984643 (2016.9.6)

### [Disclosure]

### [Technical Problem]

The present invention has been made to solve the above problems and is directed to providing an apparatus for vacuum-drying an electrode in a roll-to-roll state, which can efficiently remove moisture from the electrode and improve the wet performance of the electrode while preventing vacuum damage even when the electrode has a high moisture content.

Also, the present invention is directed to providing an apparatus for vacuum-drying an electrode in a roll-to-roll state, which can prevent contamination by foreign substances in a vacuum chamber.

Also, the present invention is directed to providing a method of vacuum-drying an electrode in a roll-to-roll state, which can efficiently remove moisture from the electrode and improve the wet performance of the electrode.

### [Technical Solution]

The invention is an apparatus according to claim 1 and methods according to claims 14 and 15.

An apparatus for vacuum-drying an electrode in a roll-to-roll state of the present invention in order to solve the above problems is defined in the appended claims and includes a vacuum chamber in which an electrode is disposed in the roll-to-roll state to be dried; a low-vacuum evacuation device connected to the vacuum chamber by a low-vacuum pipe and configured to evacuate the vacuum chamber to a low vacuum level; a medium-high-vacuum evacuation device connected to the vacuum chamber by a medium-high-vacuum pipe separate from the low-vacuum pipe and configured to evacuate the vacuum chamber to a medium vacuum level or a high vacuum level; and a control unit connected to the low-vacuum evacuation device and the medium-high-vacuum evacuation device and configured to regulate a vacuum level in the vacuum chamber stepwise to dry the electrode.

As an example, the low vacuum level may be a vacuum level ranging from 1 to 600 Torr, the medium vacuum level may be a vacuum level ranging from 10⁻² to less than 1 Torr, and the high vacuum level may be a vacuum level ranging from 10⁻⁸ to less than 10⁻² Torr.

As a preferred example, the low-vacuum pipe and the medium-high-vacuum pipe may be connected to the bottom of the vacuum chamber.

Specifically, at least one of the low-vacuum pipe and the medium-high-vacuum pipe may be disposed adjacent to a corner portion of the vacuum chamber up-down symmetrically, left-right symmetrically, or up-down-left-right symmetrically when the vacuum chamber is viewed from the top.

As one example, a low-vacuum gauge for measuring the low vacuum level and a medium-high-vacuum gauge for measuring the medium vacuum level or the high vacuum level may be installed in the vacuum chamber.

As a specific example, the low-vacuum evacuation device includes a low-vacuum evacuation pump connected to the vacuum chamber through the low-vacuum pipe and a low-vacuum switching valve configured to open and close the low-vacuum pipe.

As a more specific example, the low-vacuum evacuation pump may be a rotary pump or may further include a roots pump being connected to the rotary pump.

As a specific example, the low-vacuum switching valve may include an on/off valve installed in the low-vacuum pipe on the side of the low-vacuum evacuation pump and a multi-stage switching valve installed in the low-vacuum pipe on the side of the vacuum chamber and configured to regulate an opening degree.

As a more specific example, the multi-stage switching valve may be one of a servo valve, an SMC two-stage valve, and a throttle valve.

Specifically, the medium-high-vacuum evacuation device may include a medium-high-vacuum evacuation pump connected to the vacuum chamber through the medium-high-vacuum pipe and a medium-high-vacuum switching valve configured to open and close the medium-high-vacuum pipe.

As a specific example, the medium-high-vacuum evacuation pump may include a dry pump and a turbo molecular pump (TMP) connected to the dry pump by the medium-high-vacuum pipe and installed in the medium-high-vacuum pipe adjacent to the vacuum chamber.

As a more specific example, the medium-high-vacuum switching valve may include an on/off valve installed in the medium-high-vacuum pipe on the side of the dry pump and an adaptive pressure control (APC) valve installed in the medium-high-vacuum pipe between the TMP and the vacuum chamber and configured to regulate an opening degree.

As an example, the medium-high-vacuum pipe on the side of the dry pump may include a bypass pipe, a first and second on/off valves may be installed in the bypass pipe and the medium-high-vacuum pipe on the side of the dry pump respectively, and the first on/off valve and the second on/off valve may be sequentially opened.

According to the invention, the control unit controls the low-vacuum evacuation device and the medium-high-vacuum evacuation device to evacuate the vacuum chamber to a low vacuum level, a medium vacuum level, or a high vacuum level depending on a set process condition, and the control unit controls the low-vacuum evacuation device and the medium-high-vacuum evacuation device to evacuate the vacuum chamber stepwise starting from the low vacuum level to the medium vacuum level or the high vacuum level, when the vacuum chamber is evacuated to the medium vacuum level or the high vacuum level.

While a predetermined number of electrode rolls are dried in the roll-to-roll state in the vacuum chamber and then removed from the vacuum chamber, the control unit is configured to control the vacuum level stepwise to evacuate the vacuum chamber to a predetermined medium vacuum level or high vacuum level to remove foreign substances in the vacuum chamber.

As another aspect of the present invention, a method of vacuum-drying an electrode in a roll-to-roll state includes the use of an apparatus according to the invention and operations of evacuating a vacuum chamber to a low vacuum level according to a set process condition in order to vacuum-dry an electrode disposed in the roll-to-roll state in the vacuum chamber; and drying the electrode in the vacuum chamber at the low vacuum level, and further includes an operation of after drying a predetermined number of electrode rolls in the roll-to-roll state in the vacuum chamber, removing, in a state of the electrodes being removed from the vacuum chamber, foreign substances in the vacuum chamber setting to the vacuum chamber to a predetermined medium vacuum level or high vacuum level.

The predetermined medium vacuum level or high vacuum level is obtained by evacuating the vacuum chamber to a low vacuum level and then stepwise starting from the low vacuum level until the predetermined medium vacuum level or high vacuum level is reached.

A method of vacuum-drying an electrode in a roll-to-roll state according to still another aspect of the present invention includes the use of an apparatus according to the invention and operations of evacuating a vacuum chamber stepwise starting from a low vacuum level until a medium vacuum level or a high vacuum level is reached according to a set process condition in order to vacuum-dry an electrode disposed in the vacuum chamber in the roll-to-roll state and drying the electrode in the vacuum chamber at the medium vacuum level or the high vacuum level.

, the method further includes an operation of, after drying a predetermined number of electrode rolls in the roll-to-roll state in the vacuum chamber, removing, in a state of the electrodes being removed from the vacuum chamber, foreign substances in the vacuum chamber setting to the vacuum chamber to a predetermined medium vacuum level or high vacuum level.

### [Advantageous Effects]

According to the present invention set forth in the appended claims, it is possible to efficiently remove moisture by applying various vacuum pressures while preventing vacuum damage to an electrode having a high moisture content.

Also, it is possible to further improve the wet performance of the electrode.

According to the present invention, it is possible to continuously vacuum-dry an electrode while preventing contamination by foreign substances in a vacuum chamber.

### [Brief Description of the Drawings]

FIG. 1 is a schematic diagram showing a vacuum drying apparatus according to an embodiment of the present invention.
FIG. 2 includes a perspective view and a plan view showing a connection structure of a vacuum pipe of the vacuum drying apparatus of FIG. 1.
FIG. 3 is a schematic diagram showing an example of a vacuum heating device to which the vacuum drying apparatus of the present invention is applied to perform vacuum drying after electrode notching.
FIG. 4 is a flowchart illustrating a vacuum drying method according to an embodiment of the present invention.
FIG. 5 is a vacuum level profiling graph showing changes with time in the vacuum level of several battery cells when vacuum pumping is performed by an evacuation device.
FIG. 6 is a flowchart illustrating a vacuum drying method according to another embodiment of the present invention.

### [Best Modes]

Hereinafter, the detailed configuration of the present invention will be described in detail with reference to the accompanying drawings and according to several embodiments. The following embodiments are illustratively shown in order to aid in understanding the present invention, the accompanying drawings are not drawn to scale to aid in understanding the present invention, and dimensions of some components may be exaggerated.

An apparatus for vacuum-drying an electrode in a roll-to-roll state of the present invention includes a vacuum chamber in which an electrode is disposed in the roll-to-roll state to be dried; a low-vacuum evacuation device connected to the vacuum chamber by a low-vacuum pipe and configured to evacuate the vacuum chamber to a low vacuum level; a medium-high-vacuum evacuation device connected to the vacuum chamber by a medium-high-vacuum pipe separate from the low-vacuum pipe and configured to evacuate the vacuum chamber to a medium vacuum level or a high vacuum level; and a control unit connected to the low-vacuum evacuation device and the medium-high-vacuum evacuation device and configured to regulate a vacuum level in the vacuum chamber stepwise to dry the electrode.

The conventional vacuum drying apparatus for vacuum-drying electrodes in a roll-to-roll state heats and dries electrodes at a low vacuum level of 1 Torr or more and thus has a limitation in removing moisture from a high-moisture electrode such as electrodes coated with a high-nickel positive-electrode material or an electrode coated with an active material having a small particle size structure, which have recently been in the spotlight. Also, vacuum drying at a low vacuum level as described above had a limit on a bubble formation ability to improve wet performance.

In order to solve this conventional problem, by including a low-vacuum evacuation device configured to evacuate a vacuum chamber to a low vacuum level and also a medium-high-vacuum evacuation device connected to a vacuum chamber by a pipe separate from the low-vacuum evacuation device, the present invention aims to remove moisture from a high-moisture electrode and improve wet performance. Also, by providing a control unit connected to the low-vacuum evacuation device and the medium-high-vacuum evacuation device and configured to regulate a vacuum level in the vacuum chamber stepwise to dry the electrode, the vacuum chamber can be rapidly evacuated to a medium vacuum degree or a high vacuum degree, and thus it is possible to prevent vacuum damage to the electrode in the vacuum chamber.

Meanwhile, the vacuum degree described herein may also be referred to as vacuum pressure (force) and will be expressed in units of Torr. The size of the vacuum level used during the vacuum drying of the electrode may be different from the size of the vacuum level classified in the general vacuum pumping field. In one embodiment, the low vacuum level is a vacuum level ranging from 1 to 600 Torr, that is, a vacuum level of 1 Torr or more. The low vacuum level is a vacuum pressure that can be applied not to a high-nickel positive electrode or an electrode having a small particle size structure but to an electrode of a conventional lithium secondary battery. Even if conventional electrodes other than the above-described high-moisture electrodes are vacuum-dried at the low vacuum level, it is possible to sufficiently remove moisture from the electrodes. However, for example, an electrode in which the nickel content of the positive electrode is increased or an electrode having a small particle size structure in which the particle size of the active material contained in the electrode is fine is vulnerable to external environments, and thus the electrode has a higher moisture content than the conventional electrode. In order to dry such an electrode with a higher moisture content and improve wet performance, it is preferable to evacuate the vacuum chamber to a higher vacuum level. To this end, in the present invention, a medium vacuum level of less than 1 Torr is applied, and also a high vacuum level of less than 10⁻² Torr is applied if necessary. The preferred range of the medium vacuum level applied to the present invention may be from 10⁻² to less than 1 Torr, and the range of the high vacuum level may be, for example, 10⁻⁸ to less than 10⁻² Torr. If necessary, an ultra-high vacuum level of less than 10⁻⁸ Torr may be applied, but this may increase the electrode manufacturing cost. Therefore, it is desirable to select the vacuum level in consideration of available vacuum equipment and manufacturing cost. Also, as will be described later, according to an embodiment of the present invention, the vacuum chamber may be evacuated to a medium vacuum level or a high vacuum level in order to clean the vacuum chamber as well as perform vacuum drying. Thus, the range of the medium vacuum level or the high vacuum level for the cleaning may be appropriately selected for efficiency within the vacuum level in the above range. However, the size of the medium vacuum level or the high vacuum level for the vacuum drying of electrodes does not necessarily match the size of the medium vacuum level or the high vacuum level for vacuum chamber cleaning, and vacuum levels may be determined in ranges that can best achieve the respective purposes of the vacuum drying and cleaning.

### [Detailed Description of the Preferred Embodiments]

Hereinafter, the present invention will be described in more detail with reference to the accompanying drawings and specific embodiments of the present disclosure.

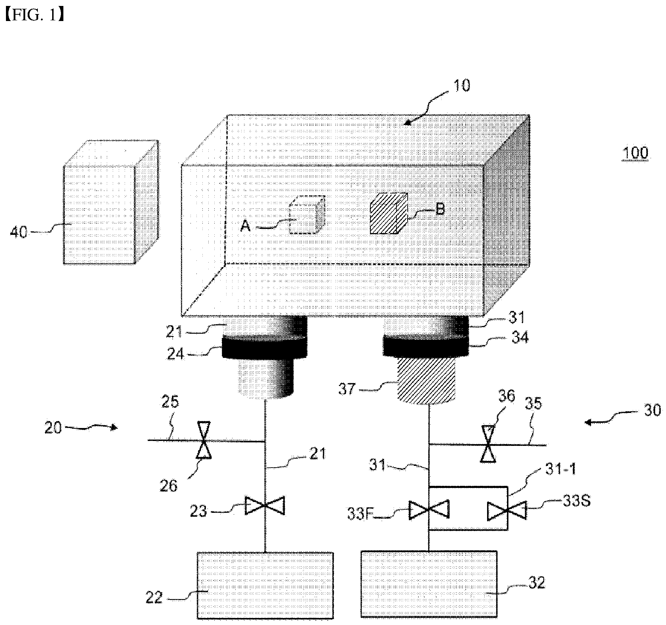

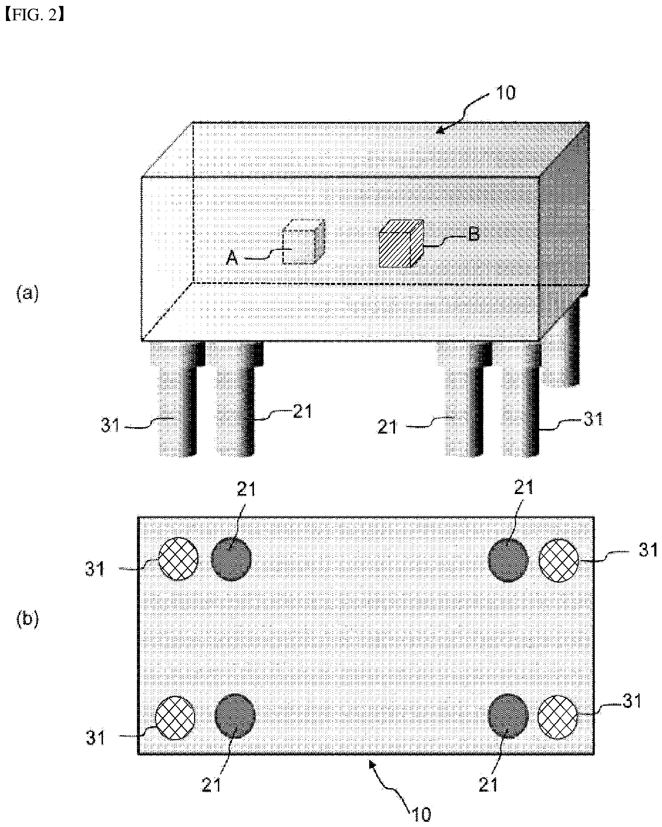

FIG. 1 is a schematic diagram showing a vacuum drying apparatus 100 according to an embodiment of the present invention, and FIG. 2 includes a perspective view and a plan view showing a connection structure of a vacuum pipe of the vacuum drying apparatus 100 of FIG. 1.

The vacuum drying apparatus 100 of the present invention comprises a vacuum chamber 10 for drying an electrode in a roll-to-roll state. In FIGS. 1 and 2, only the vacuum drying apparatus 100 is illustrated, and no electrode is illustrated for convenience of description. However, an electrode may be disposed in the vacuum chamber 10 in a roll-to-roll state.

In order to vacuum-dry an electrode disposed in the vacuum chamber 10 in a roll-to-roll state, the vacuum drying apparatus 100 of the present invention includes a low-vacuum evacuation device 20 connected to the vacuum chamber 10 through a low-vacuum pipe 21.

Also, according to the present invention, the vacuum drying apparatus 100 comprises a medium-high-vacuum evacuation device 30 connected to the vacuum chamber 10 through a medium-high-vacuum pipe 31 separate from the low-vacuum pipe 21.

According to the present invention, the two types of evacuation devices (the low-vacuum evacuation device and the medium-high evacuation device) are connected to the vacuum chamber 10 through separate vacuum pipes. Considering the simplification of the apparatus, it would be desirable to be able to perform evacuation from a low vacuum to a high vacuum using a single evacuating pump. However, for example, a turbo molecular pump (TMP) for performing evacuation to a high vacuum level has a structure suitable for high-speed rotation due to the structure of the pump device, and thus there is a risk of damage to a rotary shaft or pump parts when the pump rotates at a low speed to achieve a low vacuum level. Therefore, it is technically difficult to design a vacuum pump to perform evacuation from a low vacuum level even to a medium vacuum level, let alone a high vacuum level. Also, when the low-vacuum evacuation device 20 and the medium-high-vacuum evacuation device 30 are connected to a single pipe, it is difficult to regulate a vacuum level, and vacuum control is also very complicated. Also, when the regulation of the vacuum level fails, vacuum damage to the electrode in the vacuum chamber 10 may occur due to evacuation to the medium vacuum level or the high vacuum level.

Accordingly, according to the present invention, the low-vacuum evacuation device 20 and the medium-high-vacuum evacuation device 30 are connected to the vacuum chamber 10 through separate dedicated pipes. However, in the case of the medium-high-vacuum evacuation device 30, a device capable of performing evacuation over the range of the medium vacuum level to the high vacuum level, which is defined in the present invention, may be employed. It will be appreciated that the medium-high-vacuum evacuation device 30 is separated into the medium-vacuum evacuation device and the high-vacuum evacuation device, which are connected respectively to the vacuum chamber through separate pipes. However, in this case, the configuration of the vacuum drying apparatus 100 is too complicated, resulting in an increase in manufacturing cost and an increase in the complexity of the vacuum control flow. Also, when the vacuum level is increased stepwise from the medium vacuum level to the high vacuum level by the medium-high evacuation device 30, it is possible to more effectively prevent vacuum damage to an electrode.

Referring to FIG. 2, according to an embodiment of the present invention, the low-vacuum pipe 21 and the medium-high-vacuum pipe 31 are connected respectively from the bottom of the vacuum chamber 10. When a vacuum pipe is connected from the side of the vacuum chamber 10, the airflow in the vacuum chamber 10 is concentrated on both sides, which makes the internal airflow unstable, and thus an appearance defect may occur in a manufactured battery. Also, when the vacuum pipes are connected to the top of the vacuum chamber 10, the vacuum pipes are inevitably elongated to extend to the top of the vacuum chamber 10, and in this case, additional equipment such as a regulator should be installed on the elongated pipe to perform pressure regulation. Therefore, in order to stabilize the airflow in the vacuum chamber 10 and prevent a pipe line loss, the vacuum pipes are connected from the bottom of the vacuum chamber 10 as shown in the perspective view of (a) of FIG. 2.

The plan view of (b) of FIG. 2 is a plan view of the vaccum chamber 10 viewed from the top. In this embodiment, at least one of the low-vacuum pipe 21 and the medium-high-vacuum pipe 31 is disposed adjacent to a corner portion of the vacuum chamber 10 by forming a pair of up-down symmetrically, left-right symmetrically, or up-down-left-right symmetrically when the vacuum chamber 10 is viewed from the top. In order to uniformly maintain the vacuum level in the vacuum chamber 10, one or both of the low-vacuum pipe 21 and the medium-high-vacuum pipe 31 are symmetrically installed in the vacuum chamber 10. Preferably, as shown in (b) of FIG. 2, when the pipes are installed adjacent to the corners of the vacuum chamber 10 so that the pipes are arranged in the vacuum chamber 10 up-down and left-right symmetrically and in pairs, the vacuum level in the vacuum chamber 10 can be made more uniform. In the illustrated embodiment, the medium-high-vacuum pipe 31 is installed on the outer side of the low-vacuum pipe 21. However, the medium-high-vacuum pipe 31 may be installed on the inner side of the low-vacuum pipe 21.

In FIGS. 1 and 2, a low-vacuum gauge A for measuring a low vacuum level and a medium-high-vacuum gauge B for measuring a medium vacuum level or a high vacuum level are installed in the vacuum chamber 10. When the low-vacuum gauge A for only measuring a low vacuum level and the medium-high-vacuum gauge B for measuring medium and high vacuum levels are installed as the vacuum gauges, vacuum levels achieved by the low-vacuum evacuation device 20 and the medium-high-vacuum evacuation device 30 may be measured by the low-vacuum gauge A and the medium-high-vacuum gauge B, respectively, and the control of the vacuum level can be performed more conveniently. Also, since a vacuum gauge can properly measure a specific vacuum level depending on the type, the most suitable vacuum gauge may be selected according to a corresponding vacuum level in the vacuum chamber.

As the low-vacuum gauge A, for example, a capacitance manometer (CA) gauge that converts pressure change motion of a thin diaphragm into an electric signal proportional to the pressure may be employed. The CA gauge may measure a wide area ranging from 1 to 1,000 Torr and generates a signal by a physical change in the vacuum gauge rather than a change in gas properties in the chamber. Thus, the CA gauge can measure values independent of the gas composition in the measurement chamber and has the advantage of having relatively high accuracy.

Examples of the medium-high-vacuum gauge B may include ion gauges that ionize gas and amplify and measure ion currents. Among the ion gauges, a Bayard-Alpert (BA) ion gage, which is suitable for measuring a lower vacuum level by reducing X-rays generated from the ion gauge, is preferable.

For convenience of description, it is shown in FIGS. 1 and 2 that the low-vacuum gauge A and the medium-high-vacuum gauge B are placed in the middle of the vacuum chamber. However, in order not to interfere with various equipment (unwinders, rewinders, heating equipment, vacuum parts, etc.) installed in the vacuum chamber 10, it will be appreciated that the vacuum gauges may be installed in the vacuum chamber 10 by a coupling member such as a bracket or a bolt-nut pair which are not shown here.

The low-vacuum evacuation device 20 connected to the vacuum chamber 10 of the vacuum drying apparatus 100 of the present invention by the low-vacuum pipe 21 includes a low-vacuum evacuation pump connected to the vacuum chamber 10 through the low-vacuum pipe 21 and a low-vacuum switching valve configured to open and close the low-vacuum pipe 21.

As an example of the low-vacuum evacuation pump 22, a rotary pump that suctions, compresses, and discharges gas by the rotation of a vane may be used. As another example, a roots pump connected in series to the rotary pump as an auxiliary pump may be used. The roots pump is a pump that discharges gas entering an intake port using two rotors rotating in opposite directions. Connecting the roots pump to the rotary pump can increase the discharging speed and prevent contamination due to the backflow of lubricant oil in the rotary pump. The above rotary pump or roots pump is used in a rough vacuum region in the range of 760 to 1 Torr. The rotary pump and the roots pump are pumps commonly used in the field of vacuum technology, and thus a detailed description thereof will be omitted.

As shown in FIG. 1, the low-vacuum switching valve according to an embodiment of the present invention includes an on/off valve 23 installed in the low-vacuum pipe 21 on the side of the low-vacuum evacuation pump 22 and a multi-stage switching valve 24 installed in the low-vacuum pipe 21 on the vacuum chamber 10 side and configured to regulate the opening degree. In order to evacuate the vacuum chamber 10 to a low vacuum level, the on/off valve 23 is opened and the multi-stage switching valve 24 installed in the low-vacuum pipe 21 on the vacuum chamber side is opened, and in this case, the evacuation may be performed to a predetermined low vacuum level. In order to achieve a desired low vacuum level in this embodiment, the multi-stage switching valve 24 is installed in the low-vacuum pipe 21 on the side of the vacuum chamber to change and regulate the vacuum level in the vacuum chamber 10 by regulating the opening degree. For example, as the multi-stage switching valve 24, one of a servo valve, an SMC two-stage valve, and a throttle valve may be employed. The servo valve is a valve that can control the opening position of the valve with a servomotor to regulate the vacuum pressure. The SMC two-stage valve is a two-stage valve that uses two small and large valves, and may open and close the small valve to regulate the vacuum pressure in a small range and open and close the large valve to regulate the vacuum pressure in a large range. The throttle valve is a valve that can change the pressure by regulating the opening angle of the valve body in the throttle body.

As described above, in this embodiment, by installing the multi-stage switching valve 24 in the low-vacuum pipe 21 on the side of the vacuum chamber 10, the vacuum chamber 10 may be evacuated stepwise until a desired low vacuum level is reached. In addition, for example, by regulating the opening degree of the servo valve, a specific low vacuum level may be maintained, or the corresponding vacuum level may be changed to another vacuum level.

In order to return the vacuum chamber 10 to atmospheric pressure after the vacuum chamber 10 is evacuated to a predetermined low vacuum level to dry the electrode, a vent pipe 25 and a vent valve 26 are installed in the low-vacuum pipe 21. The vent valve 26 may be closed when the on/off valve 23 is opened and may be opened to restore the pressure in the vacuum chamber 10 when the on/off valve 23 is closed.

The vacuum drying apparatus 100 of the present invention includes a medium-high-vacuum evacuation device 30 connected to the vacuum chamber 10 through the medium-high-vacuum pipe 31 separate from the low-vacuum pipe 21. Specifically, the medium-high-vacuum evacuation device 30 includes a medium-high-vacuum evacuation pump connected to the vacuum chamber 10 through the medium-high-vacuum pipe 31 and a medium-high-vacuum switching valve configured to open and close the medium-high-vacuum pipe.

In the embodiment of FIG. 1, a dry pump 32 and a TMP 37 connected to the dry pump 32 by the medium-high-vacuum pipe 31 and installed in the medium-high-vacuum pipe 31 adjacent to the vacuum chamber 10 constitute the medium-high-vacuum evacuation pump.

The dry pump 32 is a pump that does not use oil to rotate rotors in the pump. In this embodiment, in order to prevent the occurrence of vacuum damage when the vacuum chamber 10 is suddenly evacuated to a high vacuum level and to prevent damage to the TMP parts, the dry pump 32 is provided as a part of the medium-high-vacuum evacuation pump.

The TMP 37 is a turbo molecular pump and is a pump that can achieve vacuum levels of 10⁻³ Torr, which is a medium vacuum level, and 10⁻¹⁰ Torr, which is an ultra-high vacuum level, through an alternating arrangement of a rotary shaft that rotates at a high rate and a fixed shaft inclined in the opposite direction of the rotary shaft.

In the embodiment of FIG. 1, as the medium-high-vacuum switching valve, the on/off valve 33 installed in the medium-high-vacuum pipe 31 on the side of the dry pump 32 and an adaptive pressure control (APC) valve 34 installed in the medium-high-vacuum pipe 31 between the TMP 37 and the vacuum chamber 10 to regulate the opening degree are provided. The APC valve 34 is a valve that can perform fine vacuum control by controlling the opening position and angle of the valve in the range of 1 to 1000 points, and is therefore a valve suitable for vacuum control to a medium vacuum level and a high vacuum level.

Therefore, the medium-high-vacuum evacuation device 30 according to this embodiment may evacuate the vacuum chamber 10 stepwise until a desired vacuum level is reached by installing the APC valve 34 in the medium-high-vacuum pipe 31 on the side of the vacuum chamber and may maintain a specific medium vacuum level or high vacuum level or change the corresponding vacuum level to another vacuum level, for example, by regulating the opening degree of the APC valve 34.

In order for the medium-high-vacuum evacuation device 30 to increase pressure in the vacuum chamber 10 after evacuating the vacuum chamber 10 to a predetermined medium vacuum level or high vacuum level to dry an electrode, the vent pipe 35 and the vent valve 36 are installed in the medium-high-vacuum pipe. The vent valve 36 may be closed when the on/off valve 33 is opened and may be opened to restore the pressure in the vacuum chamber 10 when the on/off valve 33 is closed.

In an embodiment of FIG. 1, in order to prevent vacuum damage to the electrode and prevent TMP parts from being damaged, the medium-high-vacuum pipe 31 on the side of the dry pump 32 includes a bypass pipe 31-1. That is, by branching the medium-high vacuum pipe into two pipes, i.e., the bypass pipe 31-1 and the medium-high-vacuum pipe 31 on the side of the dry pump, the low vacuum pressure is prevented from being applied to the TMP 37 all at once. Also, by installing first and second on/off valves 33S and 33F in the bypass pipe 31-1 and the medium-high-vacuum pipe 31 on the side of the dry pump respectively and sequentially opening the first on/off valve 33S and the second on/off valve 33F, the effect on the TMP 37 is minimized. Here, the first on/off valve 33S corresponds to a slow start valve, and the second on/off valve 33F corresponds to a fast start valve.

As described above, according to the present invention, the low-vacuum evacuation device 20 and the medium-high-vacuum evacuation device 30 connected to the vacuum chamber 10 by separate vacuum pipes are provided, and the evacuation devices are connected to a control unit 40. By controlling the low-vacuum evacuation device and the medium-high-vacuum evacuation device such that the vacuum level in the vacuum chamber 10 is regulated stepwise to dry the electrode, the control unit 40 performs control to evacuate the vacuum chamber 10 to a low vacuum level, a medium vacuum level, or a high vacuum level according to set process conditions without applying vacuum damage to the electrode. In particular, when evacuating the vacuum chamber 10 to a medium vacuum level or a high vacuum level, the control unit 40 of the present invention controls the low-vacuum evacuation device and the medium-high-vacuum evacuation device to evacuate the vacuum chamber 10 from the low vacuum level to the medium vacuum level or the high vacuum level stepwise rather than to the medium vacuum level or the high vacuum level immediately.

Also, according to the present invention, since the medium-high-vacuum evacuation device 30 is provided in addition to the low-vacuum evacuation device 20, it is possible to remove foreign substances in the vacuum chamber 10 using the medium-high-vacuum evacuation device 30. While the process of introducing an electrode roll into the vacuum chamber 10 and vacuum-drying the electrode in a roll-to-roll state is repeated, foreign substances derived from the electrode are generated in the vacuum chamber 10. A typical low vacuum level used for vacuum-drying electrodes has a limit to removing foreign substances. While a predetermined number of electrode rolls are dried in the vacuum chamber 10 in a roll-to-roll state and then the electrode is removed from the vacuum chamber 10, the control unit 40 of the present invention may control the vacuum level stepwise to evacuate the vacuum chamber 10 to a predetermined medium vacuum level or high vacuum level to remove foreign substances in the vacuum chamber 10.

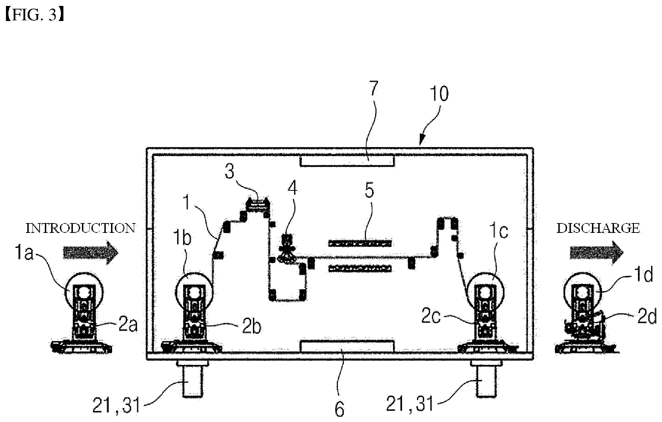

FIG. 3 is a schematic diagram showing an example of a vacuum heating device to which the vacuum drying apparatus 100 of the present invention is applied to perform vacuum drying after electrode notching. Even if an electrode of high-nickel positive-electrode material or an electrode with a small particle size electrode structure is vacuum-dried in the so-called electrode process and moisture is removed, it is necessary to remove moisture again after the notching process, which is an assembly process, because the electrode still contains moisture beyond the set specification. FIG. 3 shows an example of vacuum drying by introducing the electrode into the vacuum chamber 10 after the notching process. In FIG. 3, the vacuum drying apparatus 100 of FIGS. 1 and 2 is not shown (only the vacuum pipes 21 and 31 are shown), and a specific process in which the electrode is vacuum-dried after the notching process is shown.

After the notching process, the electrode 1 is wound on a core, and an electrode roll 1a in which the electrode is wound on the core is installed in a loader 2a outside the vacuum chamber 10. The electrode roll 1a is installed in an unwinder 2b in the vacuum chamber by a robot that is not shown. Subsequently, an electrode roll 1b is unwound from the unwinder 2b, and the electrode 1 is connected to a rewinder 2c installed in the vacuum chamber 10. When such an electrode is disposed between the unwinder 2b and the rewinder 2c in a roll-to-roll state, the vacuum chamber 10 is evacuated to dry the electrode. The electrode 1 proceeds in the vacuum chamber 10 in a roll-to-roll state when the unwinder 2b and the rewinder 2c are driven, and the electrode 1 in a roll-to-roll state proceeds to the rewinder 2c while the tension is regulated and the meandering is prevented by a meandering adjustment unit 3 and a tension adjustment unit 4 installed in the vacuum chamber 10. While the vacuum chamber 10 is evacuated in a roll-to-roll state by the vacuum drying apparatus 100 shown in FIGS. 1 and 2, the electrode is heated and dried by the heating unit 5 at a predetermined vacuum level or is vacuum-dried by hot air that is sprayed by a nitrogen gas spray unit 6 and circulated by a high-speed fan 7. The dried electrode 1 is wound by the rewinder 2c. Then, the evacuation of the vacuum chamber is stopped, and a wound electrode roll 1c is moved to an unloader 2d outside the vacuum chamber 10 by a robot or the like. Thus, the vacuum drying is completed. With respect to an electrode 1 transferred in a roll-to-roll state in the vacuum chamber 10 after the notching process in the above process, the control unit 40 of the present invention allows the electrode to be heated and dried while regulating the vacuum level in the vacuum chamber 10 stepwise, that is, to a low vacuum level, a medium vacuum level, or a high vacuum level, using the low-vacuum evacuation device 20 and the medium-high-vacuum evacuation device 30 connected to the vacuum chamber 10 through separate pipes, thereby removing moisture from the electrode and improving wet performance. The control unit 40 of the present invention may be connected not only to the evacuation device but also to the unwinder 2b and the rewinder 2c, the heating unit 5, the tension adjustment unit 4, the meandering adjustment unit 3, or the like of FIG. 3 to organically control evacuation and heat drying.

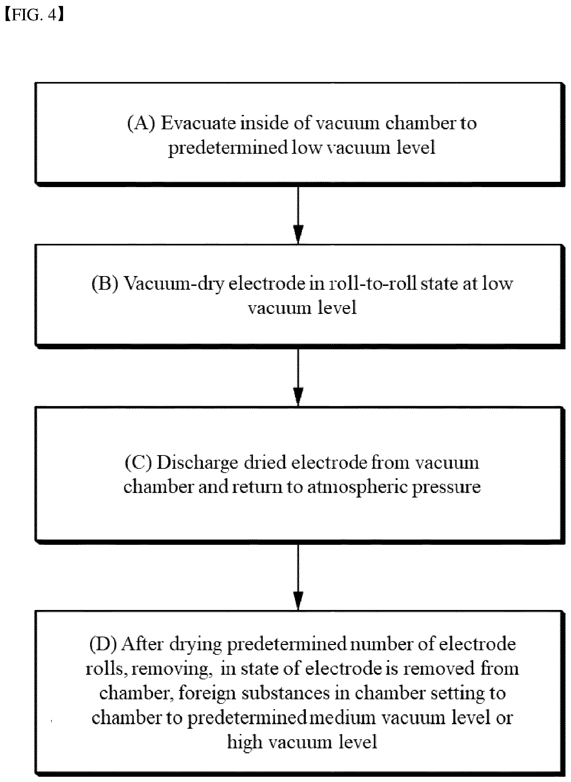

The operations and the vacuum drying method of the vacuum drying apparatus 100 of the present invention will be described in detail below with reference to FIGS. 4 to 6.

FIG. 4 is a flowchart illustrating a vacuum drying method according to an embodiment of the present invention.

The vacuum drying method of an electrode in a roll-to-roll state according to an embodiment of the present invention includes operations of evacuating a vacuum chamber to a low vacuum level according to a set process condition in order to vacuum-dry an electrode disposed in a roll-to-roll state in the vacuum chamber (operation (a) of FIG. 4) and drying the electrode in the vacuum chamber at the low vacuum level (operation (b) of FIG. 4) and further includes an operation of after drying a predetermined number of electrode rolls in the roll-to-roll state in the vacuum chamber, removing, in a state of the electrodes being removed from the vacuum chamber, foreign substances in the vacuum chamber setting to the vacuum chamber to a predetermined medium vacuum level or high vacuum level (operation (d) of FIG. 4).

In operation (a), while the electrode rolls 1b and 1c are disposed between the unwinder 2b and the rewinder 2c in the vacuum chamber 10 as shown in FIG. 3 to form a roll-to-roll state, the vacuum chamber 10 may be evacuated to a predetermined low vacuum level by the low-vacuum evacuation device 20 of the vacuum drying apparatus 100 of FIG. 1. In this case, the target electrode 1 to be vacuum-dried is a conventional model of electrode that does not have a high moisture content, and a process condition (recipe) for vacuum-drying such a conventional electrode is preset and input to the control unit 40. According to the preset process condition, for example, the on/off valve 23 installed in the low-vacuum pipe 21 is opened while the low-vacuum evacuation pump 22 (a rotary pump or a rotary pump and a roots pump) of the low-vacuum evacuation device 20 of the vacuum drying apparatus 100 of FIG. 1 is activated. In this case, the vent valve 26 of the vent pipe 25 is closed. After the on/off valve 23 is opened, the multi-stage switching valve 24 installed in the low-vacuum pipe 21 on the side of the vacuum chamber is opened. Also, for example, by adjusting the opening degree of the multi-stage switching valve 24, which is a servo valve, the vacuum degree may be adjusted and stably maintained.

In operation (b), when the low vacuum level corresponding to the process condition is stabilized and maintained in the vacuum chamber 10, the control unit 40 may operate the heating unit 5 of FIG. 3 or the like to dry the electrode in a roll-to-roll state. According to the set process condition, the electrode is dried by being heated for a predetermined time while the vacuum level is maintained for the predetermined time. During the vacuum drying, the electrode 1 is heated and dried while moving from the unwinder 2b to the rewinder 2c at a predetermined rate.

In operation (c), the dried electrode is wound by the rewinder 2c, and then the wound electrode roll 1c is discharged to the outside of the vacuum chamber 10. Before the electrode is discharged to the outside of the vacuum chamber, the low vacuum switching valve (on/off valve and servo valve) of the low-vacuum evacuation device 20 is closed, and the vent valve 26 is opened to bring the internal pressure of the vacuum chamber 10 to atmospheric pressure. An electrode roll 1d discharged to the outside of the vacuum chamber is mounted on the unloader 2d. Subsequently, the electrode is vacuum-dried in a roll-to-roll state in the vacuum chamber 10 by repeating operations (a) to (c).

In operation (d), the vacuum drying method according to an embodiment of the present invention further includes a cleaning process for removing foreign substances in the vacuum chamber 10. When a predetermined number of electrode rolls are vacuum-dried in a roll-to-roll state in the vacuum chamber 10 by repeating operations (a) and (b) or operations (a) to (c), foreign substances derived from the electrode or introduced from the outside may accumulate in the vacuum chamber. When the subsequent electrode roll is vacuum-dried in the vacuum chamber 10 in the presence of such foreign substances, the electrode may be contaminated with the foreign substances, and the electrode characteristics or the wet performance may be degraded. Accordingly, the vacuum drying method of the present invention further includes an operation of after vacuum-drying a predetermined number of, for example, 50, electrode rolls in the vacuum chamber 10, removing, in a state of the electrodes being removed from the vacuum chamber, foreign substances in the vacuum chamber 10 setting to the vacuum chamber 10 to a predetermined medium vacuum level or high vacuum level.

In this case, the predetermined medium vacuum level or high vacuum level is obtained by evacuating the vacuum chamber 10 to a low vacuum level and then stepwise until the predetermined medium vacuum level or high vacuum level is reached starting from the low vacuum level. As described above, when the vacuum chamber 10 is evacuated immediately to the medium or high vacuum level, there is a possibility that the rotary shaft or parts of the TMP 37 of the medium-high-vacuum evacuation device 30 may be damaged. Therefore, it is necessary to make the inside of the vacuum chamber 10 into a low vacuum level atmosphere first before setting the inside of the vacuum chamber 10 to a predetermined medium-high-vacuum level. Specifically, when there is no electrode in the vacuum chamber 10 and the vacuum chamber 10 is returned to atmospheric pressure, the vacuum chamber 10 is evacuated to the low-vacuum level by opening the on/off valve 23 and the servo valve 24 while the low-vacuum evacuation pump 22 (e.g., a rotary pump) of FIG. 1 is activated. In the state that the low vacuum level is stabilized by regulating the opening degree of the servo valve, the medium-high-vacuum evacuation device 30 is activated. Basically, the medium-high-vacuum evacuation pump of the medium-high-vacuum evacuation device 30 is activated, and thus a first on/off valve 33S of the bypass pipe 31-1 is opened first, and then the APC valve 34 is opened. By sequentially opening the second on/off valve 33F after opening the first on/off valve 33S, a load is prevented from being applied to the TMP 37. By opening the APC valve 34, the TMP 37 evacuates the vacuum chamber until a medium vacuum level or a high vacuum level is reached. After the APC valve 34 is opened, the low-vacuum switching valves 23 and 24 of the low-vacuum evacuation device 20 are closed. The TMP 37 of the medium-high-vacuum evacuation device 30 may evacuate the vacuum chamber stepwise starting from the low-vacuum atmosphere formed by the low-vacuum evacuation device 20, and thus it is possible to prevent damage to internal parts. When the medium vacuum level or the high vacuum level in the vacuum chamber 10 is stabilized by adjusting the opening degree of the APC valve 34, foreign substances in the vacuum chamber are removed by evacuating the vacuum chamber.

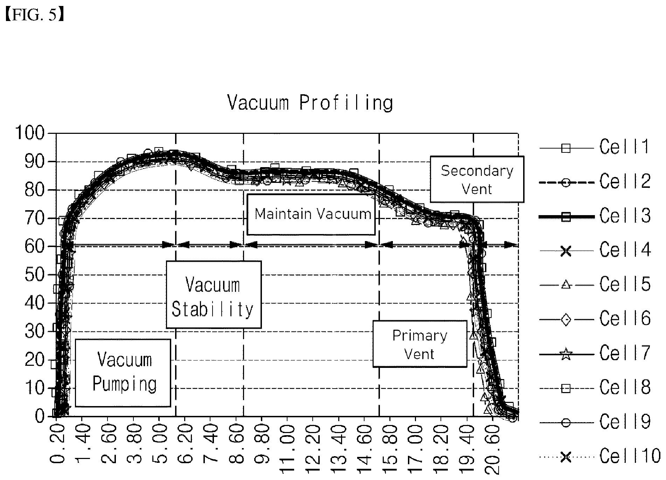

FIG. 5 is a vacuum level profiling graph showing changes with time in the vacuum level of several battery cells when vacuum pumping is performed by an evacuation device. FIG. 5 is presented to show that it is possible to check the trend of the vacuum level when evacuating with the evacuation device rather than the change in vacuum level for the electrode. As shown in FIG. 5, when the evacuation device evacuates the vacuum chamber, it can be seen that the vacuum level rises rapidly with time during vacuum pumping (evacuation) with a vacuum pump and the vacuum level is maintained at a constant value after the vacuum level is stabilized in a certain time. Subsequently, it can be seen that when a vacuum valve is shut off and a vent valve is opened, the vacuum level decreases and returns to atmospheric pressure. In the vacuum drying method of the present invention, by adjusting the multi-stage switching valve of the low-vacuum switching valve to rapidly stabilize the vacuum level, the vacuum level may be maintained at a constant value. Similarly, in the case of the medium-high vacuum switching valve, the medium vacuum level or the high vacuum level may be stabilized and maintained by adjusting the opening degree of the APC valve.

Also, whether a target vacuum level (a low vacuum level and a medium-high vacuum level) is achieved in the vacuum chamber may be checked by measuring the low vacuum level using the low-vacuum gauge (A) shown in FIGS. 1 and 2 and measuring the medium-high vacuum level using the medium-high-vacuum gauge (B).

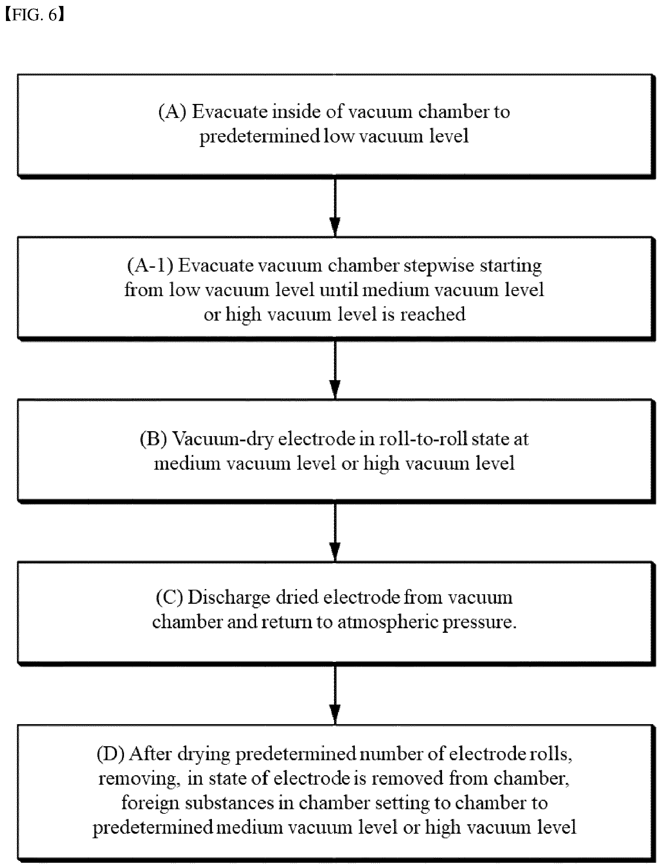

FIG. 6 is a flowchart illustrating a vacuum drying method according to another embodiment of the present invention.

The vacuum drying method of this embodiment includes operations of evacuating a vacuum chamber stepwise until the medium vacuum level or the high vacuum level is reached starting from the low vacuum level according to a set process condition in order to vacuum-dry an electrode disposed in the vacuum chamber in a roll-to-roll state; and drying the electrode in the vacuum chamber at the medium vacuum level or the high vacuum level.

This embodiment is suitable for application to electrodes having a high moisture content or needing improvement of wet performance and relates to a method of evacuating a vacuum chamber stepwise to a medium vacuum level or a high vacuum level to carry out drying.

In operation (a), while the electrode roll is disposed between the unwinder 2b and the rewinder 2c in the vacuum chamber 10 as shown in FIG. 3 to form a roll-to-roll state, the vacuum chamber 10 may be evacuated to a predetermined low vacuum level by the low-vacuum evacuation device 20 of the vacuum drying apparatus 100 of FIG. 1. In this case, the target electrode to be vacuum-dried is a model of electrode that has a high moisture content, and a process condition (recipe) for vacuum-drying such an electrode having a high moisture content is preset and input to the control unit 40. According to the preset process condition, for example, the on/off valve 23 installed in the low-vacuum pipe 21 is opened while the low-vacuum evacuation pump 22 of the low-vacuum evacuation device 20 of the vacuum drying apparatus of FIG. 1 is activated. In this case, the vent valve of the vent pipe is closed. After the on/off valve is opened, the multi-stage switching valve installed in the low-vacuum pipe on the side of the vacuum chamber is opened. Also, for example, by adjusting the opening degree of the multi-stage switching valve, which is a servo valve, the vacuum degree may be adjusted and stably maintained.

In operation (a-1), in this embodiment, by activating the medium-high-vacuum evacuation device 30 of FIG. 1 while the vacuum chamber 10 is maintained at a low vacuum level, the vacuum chamber 10 is evacuated stepwise until a medium vacuum level or a high vacuum level which is input as a process condition is reached. That is, in the state that the low vacuum level is stabilized, the first on/off valve 33S of the bypass pipe 31-1 is opened first, and then the APC valve 34 is opened. By sequentially opening the second on/off valve 33F after opening the first on/off valve 33S, a load is prevented from being applied to the TMP 37. By opening the APC valve, the TMP evacuates the vacuum chamber until a medium vacuum level or a high vacuum level is reached. After the APC valve 34 is opened, the low-vacuum switching valves 23 and 24 of the low-vacuum evacuation device are closed. The TMP 37 of the medium-high-vacuum evacuation device 30 may evacuate the vacuum chamber stepwise starting from the low-vacuum atmosphere formed by the low-vacuum evacuation device, and thus it is possible to prevent damage to internal parts. When the medium vacuum level or the high vacuum level in the vacuum chamber 10 is stabilized by adjusting the opening degree of the APC valve 34, the control unit 40 operates the heating unit 5 or the like to vacuum-dry the electrode.

In operation (b)', at the medium vacuum level or high vacuum level corresponding to the process condition, the control unit 40 operates the heating unit 5 of FIG. 3 or the like to dry an electrode in a roll-to-roll state. According to the set process condition, the electrode is dried by being heated for a predetermined time while the vacuum level is maintained for the predetermined time. During the vacuum drying, the electrode is heated and dried while moving from the unwinder 2b to the rewinder 2c at a predetermined rate.

In operation (c), the dried electrode is wound by the rewinder 2c and discharged to the outside of the vacuum chamber 10. Before the electrode is discharged to the outside of the vacuum chamber 10, the medium-high-vacuum switching valve (on/off valve and servo valve) of the medium-high-vacuum evacuation device 30 is closed, and the vent valve 36 is opened (primary vent). Also, in this state, the vent valve 26 of the low-vacuum evacuation device is opened so that the vacuum chamber 10 can quickly return to atmospheric pressure (secondary vent). Subsequently, the electrode is vacuum-dried in a roll-to-roll state in the vacuum chamber 10 by repeating operations (a) to (c).

In operation (d), the vacuum drying method according to an embodiment of the present invention may further include a cleaning process for removing foreign substances in the vacuum chamber 10. When a predetermined number of electrode rolls are vacuum-dried in a roll-to-roll state in the vacuum chamber by repeating operations (a) and (b)' or operations (a) to (c), foreign substances derived from the electrode or introduced from the outside may be accumulated in the vacuum chamber. The vacuum drying method of the present invention further includes an operation of after vacuum-drying a predetermined number of, for example, 50, electrode rolls in the vacuum chamber 10, removing, in a state of the electrodes being removed from the vacuum chamber, foreign substances in the vacuum chamber 10 setting to the vacuum chamber 10 to a predetermined medium vacuum level or high vacuum level.

The predetermined medium vacuum level or high vacuum level for removing foreign substances in the vacuum chamber does not necessarily coincide with a medium vacuum level or high vacuum level for drying an electrode having a high moisture content. Since the purposes of electrode drying and foreign substance removal are different, a medium vacuum level or a high vacuum level may be selected in an optimal range suitable for each purpose. Since the vacuum drying apparatus 100 of the present invention employs the APC valve 34 capable of regulating the opening degree, a desired medium vacuum level or high vacuum level can be achieved by adjusting the opening degree. A process of performing evacuation stepwise starting from a low vacuum level until the predetermined medium vacuum level or high vacuum level for removing foreign substances is reached is the same as that of the embodiment of FIG. 4, and thus an additional description thereof will be omitted.

Based on the above description, the vacuum drying apparatus of the present invention is used for various vacuum levels ranging from tens to hundreds of Torr to 10⁻⁸ Torr by providing a low-vacuum evacuation device and a medium-high-vacuum evacuation device. Therefore, the vacuum drying apparatus can be used to dry a model of electrode having a low moisture content as well as a high-nickel electrode having a high moisture content.

Also, through applying various vacuum pressures (vacuum levels) as described above, it is possible to improve not only the electrode moisture removal ability but also the wet performance.

In addition, even in each vacuum mode of low vacuum or medium vacuum, the vacuum level can be finely regulated stepwise by employing a servo valve or an APC valve, and thus it is possible to stabilize or regulate the vacuum level very conveniently.

In addition, since both a low-vacuum evacuation device and a medium-high-vacuum evacuation device are provided, it is advantageously possible to remove foreign substances in a vacuum chamber by the medium-high-vacuum evacuation device without vacuum damage.

Meanwhile, in addition to the above-described advantages, the vacuum drying method of the present invention can also effectively vacuum-dry electrodes in a vacuum chamber in a roll-to-roll state.

### (Description of Reference Numerals)

1: Electrode
1a, 1b, 1c, 1d: Electrode roll
2a: Loader
2b: Unwinder
2c: Rewinder
2d: Unloader
3: Meandering adjustment unit
4: Tension adjustment unit
5: Heating unit
6: Nitrogen gas spray unit
7: Fan
10: Vacuum chamber
A: Low-vacuum gauge
B: Medium-high-vacuum gauge
20: Low-vacuum evacuation device
21: Low-vacuum pipe
22: Low-vacuum evacuation pump
23: On/off valve
24: Multi-stage switching valve
25: Vent pipe
26: Vent valve
30: Medium-high-vacuum evacuation device
31: Medium-high-vacuum pipe
31-1: Bypass pipe
32: Dry pump
33S: First on/off valve
33F: Second on/off valve
34: APC valve
35: Vent pipe
36: Vent valve
37: TMP
40: Control unit
100: Vacuum drying apparatus

## Claims

1. An apparatus for vacuum-drying an electrode (1) in a roll-to-roll state, the apparatus comprising:
a vacuum chamber (10) configured to receive an electrode (1) in the roll-to-roll state for drying;
a low-vacuum evacuation device (20) connected to the vacuum chamber (10) by a low-vacuum pipe (21) and configured to evacuate the vacuum chamber (10) to a low vacuum level;
**characterized in that** the apparatus further comprises a medium-high-vacuum evacuation device (30) connected to the vacuum chamber (10) by a medium-high-vacuum pipe (31) separate from the low-vacuum pipe (21) and configured to evacuate the vacuum chamber (10) to a medium vacuum level or a high vacuum level; and
**in that** the apparatus comprises a control unit (40) connected to the low-vacuum evacuation device (20) and the medium-high-vacuum evacuation device (30) and configured to regulate a vacuum level in the vacuum chamber (10) stepwise to dry the electrode (1); and
wherein the control unit (40) controls the low-vacuum evacuation device (20) and the medium-high-vacuum evacuation device (30) to evacuate the vacuum chamber (10) to a low vacuum level, a medium vacuum level, or a high vacuum level depending on a set process condition, and the control unit (40) controls the low-vacuum evacuation device (20) and the medium-high-vacuum evacuation device (30) to evacuate the vacuum chamber (10) stepwise starting from the low vacuum level to the medium vacuum level or the high vacuum level, when the vacuum chamber (10) is evacuated to the medium vacuum level or the high vacuum level;
and the control unit (40) is configured to control the vacuum level stepwise to evacuate the vacuum chamber (10) to a predetermined medium vacuum level or high vacuum level to remove foreign substances in the vacuum chamber (10) after a predetermined number of electrode rolls (1a, 1b, 1c, 1d) dried in the roll-to-roll state in the vacuum chamber (10) are removed from the vacuum chamber (10).

2. The apparatus of claim 1, wherein
the low vacuum level is a vacuum level ranging from 1 to 600 Torr,
the medium vacuum level is a vacuum level ranging from 10⁻² to less than 1 Torr, and
the high vacuum level is a vacuum level ranging from 10⁻⁸ to less than 10⁻² Torr.

3. The apparatus of claim 1, wherein the low-vacuum pipe (21) and the medium-high-vacuum pipe (31) are connected to a bottom of the vacuum chamber (10).

4. The apparatus of claim 3, wherein at least one of the low-vacuum pipe (21) and the medium-high-vacuum pipe (31) is disposed adjacent to a corner portion of the vacuum chamber (10) up-down symmetrically, left-right symmetrically, or up-down-left-right symmetrically when the vacuum chamber (10) is viewed from a top.

5. The apparatus of claim 1, wherein a low-vacuum gauge (A) for measuring the low vacuum level and a medium-high-vacuum gauge (B) for measuring the medium vacuum level or the high vacuum level are installed in the vacuum chamber (10).

6. The apparatus of claim 5, wherein the low-vacuum evacuation device (20) comprises a low-vacuum evacuation pump (22) connected to the vacuum chamber (10) through the low-vacuum pipe (21) and a low-vacuum switching valve configured to open and close the low-vacuum pipe (21).

7. The apparatus of claim 6, wherein the low-vacuum evacuation pump (22) is a rotary pump or further includes a roots pump being connected to the rotary pump.

8. The apparatus of claim 6, wherein the low-vacuum switching valve comprises an on/off valve installed in the low-vacuum pipe (21) on a side of the low-vacuum evacuation pump (22) and a multi-stage switching valve (24) installed in the low-vacuum pipe (21) on the side of the vacuum chamber (10) and configured to regulate an opening degree.

9. The apparatus of claim 8, wherein the multi-stage switching valve (24) is one of a servo valve, an SMC two-stage valve, and a throttle valve.

10. The apparatus of claim 5, wherein the medium-high-vacuum evacuation device (30) comprises a medium-high-vacuum evacuation pump connected to the vacuum chamber (10) through the medium-high-vacuum pipe (31) and a medium-high-vacuum switching valve (24) configured to open and close the medium-high-vacuum pipe (31).

11. The apparatus of claim 10, wherein the medium-high-vacuum evacuation pump comprises a dry pump (32) and a turbo molecular pump (TMP) (37) connected to the dry pump (32) by the medium-high-vacuum pipe (31) and installed in the medium-high-vacuum pipe (31) adjacent to the vacuum chamber (10).

12. The apparatus of claim 11, wherein the medium-high-vacuum switching valve (24) comprises an on/off valve (23) installed in the medium-high-vacuum pipe (31) on a side of the dry pump (32) and an adaptive pressure control (APC) valve (34) installed in the medium-high-vacuum pipe (31) between the TMP (37) and the vacuum chamber (10) and configured to regulate an opening degree.

13. The apparatus of claim 12, wherein
the medium-high-vacuum pipe (31) on the side of the dry pump (32) comprises a bypass pipe,
first and second on/off valves (23) are installed in the bypass pipe and the medium-high-vacuum pipe (31) on the side of the dry pump (32) respectively, and
the first on/off valve (33S) and the second on/off valve (33F) are configured to be sequentially opened.

14. A method of vacuum-drying an electrode in a roll-to-roll state, the method using an apparatus according to any of claims 1-13 and comprising operations of:
evacuating a vacuum chamber (10) to a low vacuum level according to a set process condition in order to vacuum-dry an electrode disposed in the roll-to-roll state in the vacuum chamber (10); and
drying the electrode in the vacuum chamber (10) at the low vacuum level,
wherein the method further comprises an operation of after drying a predetermined number of electrode rolls (1a, 1b, 1c, 1d) in the roll-to-roll state in the vacuum chamber (10), removing, after the electrodes are removed from the vacuum chamber (10), foreign substances in the vacuum chamber (10) setting to the vacuum chamber (10) to a predetermined medium vacuum level or high vacuum level;
wherein the predetermined medium vacuum level or high vacuum level is obtained by evacuating the vacuum chamber (10) to a low vacuum level and then stepwise starting from the low vacuum level until the predetermined medium vacuum level or high vacuum level is reached.

15. A method of vacuum-drying an electrode in a roll-to-roll state, the method using an apparatus according to any of claims 1-13 and comprising operations of:
evacuating a vacuum chamber (10) stepwise starting from a low vacuum level until a medium vacuum level or a high vacuum level is reached according to a set process condition in order to vacuum-dry an electrode (1) disposed in the vacuum chamber (10) in the roll-to-roll state; and
drying the electrode (1) in the vacuum chamber (10) at the medium vacuum level or the high vacuum level;
further comprising an operation of after drying a predetermined number of electrode rolls (1a, 1b, 1c, 1d) in the roll-to-roll state in the vacuum chamber (10), removing, after the electrodes (1) are removed from the vacuum chamber (10), foreign substances in the vacuum chamber (10) setting to the vacuum chamber (10) to a predetermined medium vacuum level or high vacuum level;
wherein the predetermined medium vacuum level or high vacuum level is obtained by evacuating the vacuum chamber (10) to a low vacuum level and then stepwise starting from the low vacuum level until the predetermined medium vacuum level or high vacuum level is reached.

## Patentansprüche

1. Vorrichtung zum Vakuumtrocknen einer Elektrode (1) in einem Rolle-zu-Rolle-Zustand, wobei die Vorrichtung umfasst:
eine Vakuumkammer (10), welche dazu eingerichtet ist, eine Elektrode (1) in dem Rolle-zu-Rolle-Zustand zum Trocknen aufzunehmen;
eine Niedrig-Vakuum-Evakuierungsvorrichtung (20), welche durch ein Niedrig-Vakuumrohr (21) mit der Vakuumkammer (10) verbunden ist und welche dazu eingerichtet ist, die Vakuumkammer (10) auf ein Niedrigvakuumniveau zu evakuieren;
**dadurch gekennzeichnet, dass** die Vorrichtung ferner umfasst:
eine Mittel-Hoch-Vakuum-Evakuierungsvorrichtung (30), welche durch ein Mittel-Hoch-Vakuumrohr (31), welches von dem Niedrig-Vakuumrohr (21) getrennt ist, mit der Vakuumkammer (10) verbunden ist und welche dazu eingerichtet ist, die Vakuumkammer (10) auf ein Mittelvakuumniveau oder ein Hochvakuumniveau zu evakuieren; und
dass die Vorrichtung eine Steuereinheit (40) umfasst, welche mit der Niedrig-Vakuum-Evakuierungsvorrichtung (20) und der Mittel-Hoch-Vakuum-Evakuierungsvorrichtung (30) verbunden ist und welche dazu eingerichtet ist, ein Vakuumniveau in der Vakuumkammer (10) stufenweise zu regulieren, um die Elektrode (1) zu trocknen; und
wobei die Steuereinheit (40) die Niedrig-Vakuum-Evakuierungsvorrichtung (20) und die Mittel-Hoch-Vakuum-Evakuierungsvorrichtung (30) steuert, um die Vakuumkammer (10) in Abhängigkeit einer eingestellten Vorgangsbedingung auf ein Niedrigvakuumniveau, ein Mittelvakuumniveau oder ein Hochvakuumniveau zu evakuieren, und wobei die Steuereinheit (40) die Niedrig-Vakuum-Evakuierungsvorrichtung (20) und die Mittel-Hoch-Vakuum-Evakuierungsvorrichtung (30) steuert, um die Vakuumkammer (10) stufenweise zu evakuieren, beginnend mit dem Niedrigvakuumniveau zu dem Mittelvakuumniveau oder dem Hochvakuumniveau, wenn die Vakuumkammer (10) auf das Mittelvakuumniveau oder das Hochvakuumniveau evakuiert wird;
und wobei die Steuereinheit (40) dazu eingerichtet ist, das Vakuumniveau stufenweise zu steuern, um die Vakuumkammer (10) auf ein vorbestimmtes Mittelvakuumniveau oder ein Hochvakuumniveau zu evakuieren, um Fremdstoffe in der Vakuumkammer (10) zu entfernen, nachdem eine vorbestimmte Anzahl an Elektrodenrollen (1a, 1b, 1c, 1d), welche in dem Rolle-zu-Rolle-Zustand in der Vakuumkammer (10) getrocknet sind, aus der Vakuumkammer (10) entfernt worden sind.

2. Vorrichtung nach Anspruch 1, wobei
ein Niedrigvakuumniveau ein Vakuumniveau ist, welches von 1 bis 600 Torr beträgt,
das Mittelvakuumniveau ein Vakuumniveau ist, welches von 10⁻² bis weniger als 1 Torr beträgt, und
das Hochvakuumniveau ein Vakuumniveau ist, welches von 10⁻⁸ bis weniger als 10⁻² Torr beträgt.

3. Vorrichtung nach Anspruch 1, wobei das Niedrig-Vakuumrohr (21) und das Mittel-Hoch-Vakuumrohr (31) mit einem Boden der Vakuumkammer (10) verbunden sind.

4. Vorrichtung nach Anspruch 3, wobei wenigstens eines aus dem Niedrig-Vakuumrohr (21) und dem Mittel-Hoch-Vakuumrohr (31) oben-unten symmetrisch, links-rechts symmetrisch oder oben-unten-links-rechts symmetrisch benachbart zu einem Eckabschnitt der Vakuumkammer (10) angeordnet ist, wenn die Vakuumkammer (10) von oben betrachtet wird.

5. Vorrichtung nach Anspruch 1, wobei ein Niedrig-Vakuummessgerät (A) zum Messen des Niedrigvakuumniveaus und ein Mittel-Hoch-Vakuummessgerät (B) zum Messen des Mittelvakuumniveaus oder des Hochvakuumniveaus in der Vakuumkammer (10) installiert sind.

6. Vorrichtung nach Anspruch 5, wobei die Niedrig-Vakuum-Evakuierungsvorrichtung (20) eine Niedrig-Vakuum-Evakuierungspumpe (22), welche über das Niedrig-Vakuumrohr (21) mit der Vakuumkammer (10) verbunden ist, und ein Niedrig-Vakuum-Schaltventil umfasst, welches dazu eingerichtet ist, das Niedrig-Vakuumrohr (21) zu öffnen und zu schließen.

7. Vorrichtung nach Anspruch 6, wobei die Niedrig-Vakuum-Evakuierungspumpe (22) eine Rotationspumpe ist oder ferner eine Wälzkolbenpumpe umfasst, welche mit der Rotationspumpe verbunden ist.

8. Vorrichtung nach Anspruch 6, wobei das Niedrig-Vakuum-Schaltventil ein An/Aus-Ventil, welches an einer Seite der Niedrig-Vakuum-Evakuierungspumpe (22) in dem Niedrig-Vakuumrohr (21) installiert ist, und ein mehrstufiges Schaltventil (24) umfasst, welches an der Seite der Vakuumkammer (10) in dem Niedrig-Vakuumrohr (21) installiert ist und dazu eingerichtet ist, einen Öffnungsgrad zu regulieren.

9. Vorrichtung nach Anspruch 8, wobei das mehrstufige Schaltventil (24) eines aus einem Servoventil, einem SMC-Zweistufenventil und einem Drosselventil ist.

10. Vorrichtung nach Anspruch 5, wobei die Mittel-Hoch-Vakuum-Evakuierungsvorrichtung (30) eine Mittel-Hoch-Vakuum-Evakuierungspumpe, welche über das Mittel-Hoch-Vakuumrohr (31) mit der Vakuumkammer (10) verbunden ist, und ein Mittel-Hoch-Vakuum-Schaltventil (24) umfasst, welches dazu eingerichtet ist, das Mittel-Hoch-Vakuumrohr (31) zu öffnen und zu schließen.

11. Vorrichtung nach Anspruch 10, wobei die Mittel-Hoch-Vakuum-Evakuierungspumpe eine Trockenpumpe (32) und eine Turbomolekularpumpe (TMP) (37) umfasst, welche mit der Trockenpumpe (32) durch das Mittel-Hoch-Vakuumrohr (31) verbunden ist und benachbart zu der Vakuumkammer (10) in dem Mittel-Hoch-Vakuumrohr (31) installiert ist.

12. Vorrichtung nach Anspruch 11, wobei das Mittel-Hoch-Vakuum-Schaltventil (24) ein An/Aus-Ventil (23), welches an einer Seite der Trockenpumpe (32) in dem Mittel-Hoch-Vakuumrohr (31) installiert ist, und ein adaptives Drucksteuerung-(APC)-Ventil (34) umfasst, welches zwischen der TMP (37) und der Vakuumkammer (10) in dem Mittel-Hoch-Vakuumrohr (31) installiert ist und welches dazu eingerichtet ist, einen Öffnungsgrad zu regulieren.

13. Vorrichtung nach Anspruch 12, wobei
das Mittel-Hoch-Vakuumrohr (31) an der Seite der Trockenpumpe (32) ein Umgehungsrohr umfasst,
ein erstes und ein zweites An/Aus-Ventil (23) jeweils an der Seite der Trockenpumpe (32) in dem Umgehungsrohr und dem Mittel-Hoch-Vakuumrohr (31) installiert sind, und
das erste An/Aus-Ventil (33S) und das zweite An/Aus-Ventil (33F) dazu eingerichtet sind, sequenziell geöffnet zu werden.

14. Verfahren eines Vakuumtrocknens einer Elektrode in einem Rolle-zu-Rolle-Zustand, wobei das Verfahren eine Vorrichtung nach einem der Ansprüche 1 bis 13 verwendet, und folgende Vorgänge umfasst:
Evakuieren einer Vakuumkammer (10) auf ein Niedrigvakuumniveau gemäß einer eingestellten Vorgangsbedingung, um eine Elektrode vakuumzutrocknen, welche in dem Rolle-zu-Rolle-Zustand in der Vakuumkammer (10) angeordnet ist; und
Trocknen der Elektrode in der Vakuumkammer (10) bei dem Niedrigvakuumniveau,
wobei das Verfahren ferner, nach einem Trocknen einer vorbestimmten Anzahl an Elektrodenrollen (1a, 1b, 1c, 1d) in dem Rolle-zu-Rolle-Zustand in der Vakuumkammer (10), einen Vorgang eines Entfernens, nachdem die Elektroden aus der Vakuumkammer (10) entfernt worden sind, von Fremdstoffen in der Vakuumkammer (10), und eines Einstellens der Vakuumkammer (10) auf ein vorbestimmtes Mittelvakuumniveau oder Hochvakuumniveau umfasst;
wobei das vorbestimmte Mittelvakuumniveau oder Hochvakuumniveau durch Evakuieren der Vakuumkammer (10) auf ein Niedrigvakuumniveau und daraufhin ein stufenweises Starten von dem Niedrigvakuumniveau erhalten wird, bis das vorbestimmte Mittelvakuumniveau oder Hochvakuumniveau erreicht wird.

15. Verfahren eines Vakuumtrocknens einer Elektrode in einem Rolle-zu-Rolle-Zustand, wobei das Verfahren eine Vorrichtung nach einem der Ansprüche 1 bis 13 verwendet, und folgende Vorgänge umfasst:
Evakuieren einer Vakuumkammer (10) stufenweise, beginnend mit einem Niedrigvakuumniveau, bis ein Mittelvakuumniveau oder Hochvakuumniveau erreicht wird, gemäß einer eingestellten Vorgangsbedingung, um eine Elektrode (1) vakuumzutrocknen, welche in der Vakuumkammer (10) in dem Rolle-zu-Rolle-Zustand angeordnet ist; und
Trocknen der Elektrode (1) in der Vakuumkammer (10) bei dem Mittelvakuumniveau oder Hochvakuumniveau,
ferner umfassend, nach einem Trocknen einer vorbestimmten Anzahl an Elektrodenrollen (1a, 1b, 1c, 1d) in dem Rolle-zu-Rolle-Zustand in der Vakuumkammer (10), einen Vorgang eines Entfernens, nachdem die Elektroden (1) aus der Vakuumkammer (10) entfernt worden sind, von Fremdstoffen in der Vakuumkammer (10), und eines Einstellens der Vakuumkammer (10) auf ein vorbestimmtes Mittelvakuumniveau oder Hochvakuumniveau;
wobei das vorbestimmte Mittelvakuumniveau oder Hochvakuumniveau durch Evakuieren der Vakuumkammer (10) auf ein Niedrigvakuumniveau und daraufhin ein stufenweises Starten von dem Niedrigvakuumniveau erhalten wird, bis das vorbestimmte Mittelvakuumniveau oder Hochvakuumniveau erreicht wird.

## Revendications

1. Appareil de séchage sous vide d'une électrode (1) à l'état rouleau à rouleau, l'appareil comprenant :
une chambre à vide (10) configurée pour recevoir une électrode (1) à l'état rouleau à rouleau pour le séchage ;
un dispositif d'évacuation à vide faible (20) relié à la chambre à vide (10) par un tuyau à vide faible (21) et configuré pour évacuer la chambre à vide (10) à un niveau de vide faible ;
**caractérisé en ce que** l'appareil comprend en outre
un dispositif d'évacuation à vide moyen-élevé (30) relié à la chambre à vide (10) par un tuyau à vide moyen-élevé (31) distinct du tuyau à vide faible (21) et configuré pour évacuer la chambre à vide (10) à un niveau de vide moyen ou à un niveau de vide élevé ; et
**en ce que** l'appareil comprend une unité de commande (40) reliée au dispositif d'évacuation à vide faible (20) et au dispositif d'évacuation à vide moyen-élevé (30) et configurée pour réguler progressivement un niveau de vide dans la chambre à vide (10) pour sécher l'électrode (1) ; et
dans lequel l'unité de commande (40) commande le dispositif d'évacuation à vide faible (20) et le dispositif d'évacuation à vide moyen-élevé (30) pour évacuer la chambre à vide (10) à un niveau de vide faible, un niveau de vide moyen ou un niveau de vide élevé en fonction d'une condition de traitement définie, et l'unité de commande (40) commande le dispositif d'évacuation à vide faible (20) et le dispositif d'évacuation à vide moyen-élevé (30) pour évacuer la chambre à vide (10) en passant progressivement du niveau de vide faible au niveau de vide moyen ou au niveau de vide élevé, lorsque la chambre à vide (10) est évacuée au niveau de vide moyen ou au niveau de vide élevé ;
et l'unité de commande (40) est configurée pour commander progressivement le niveau de vide pour évacuer la chambre à vide (10) à un niveau de vide moyen prédéterminé ou à un niveau de vide élevé prédéterminé pour retirer des corps étrangers dans la chambre à vide (10) après qu'un nombre prédéterminé de rouleaux d'électrodes (1a, 1b, 1c, 1d) séchés à l'état rouleau à rouleau dans la chambre à vide (10) ont été retirés de la chambre à vide (10).

2. Appareil selon la revendication 1, dans lequel
le niveau de vide faible est un niveau de vide allant de 1 à 600 Torr,
le niveau de vide moyen est un niveau de vide allant de 10⁻² à moins de 1 Torr, et
le niveau de vide élevé est un niveau de vide allant de 10⁻⁸ à moins de 10⁻² Torr.

3. Appareil selon la revendication 1, dans lequel le tuyau à vide faible (21) et le tuyau à vide moyen-élevé (31) sont reliés à un fond de la chambre à vide (10).

4. Appareil selon la revendication 3, dans lequel au moins l'un parmi le tuyau à vide faible (21) et le tuyau à vide moyen-élevé (31) est disposé adjacent à une partie d'angle de la chambre à vide (10) de manière symétrique haut-bas, de manière symétrique gauche-droite, ou de manière symétrique haut-bas-gauche-droite lorsque la chambre à vide (10) est vue de dessus.

5. Appareil selon la revendication 1, dans lequel une jauge de vide faible (A) pour mesurer le niveau de vide faible et une jauge de vide moyen-élevé (B) pour mesurer le niveau de vide moyen ou le niveau de vide élevé sont installées dans la chambre à vide (10).

6. Appareil selon la revendication 5, dans lequel le dispositif d'évacuation à vide faible (20) comprend une pompe d'évacuation à vide faible (22) reliée à la chambre à vide (10) par l'intermédiaire du tuyau à vide faible (21) et une vanne de commutation de vide faible configurée pour ouvrir et fermer le tuyau à vide faible (21).

7. Appareil selon la revendication 6, dans lequel la pompe d'évacuation à vide faible (22) est une pompe rotative ou inclut en outre une pompe Roots reliée à la pompe rotative.

8. Appareil selon la revendication 6, dans lequel la vanne de commutation de vide faible comprend une vanne marche/arrêt installée dans le tuyau à vide faible (21) d'un côté de la pompe d'évacuation à vide faible (22) et une vanne de commutation à plusieurs étages (24) installée dans le tuyau à vide faible (21) du côté de la chambre à vide (10) et configurée pour réguler un degré d'ouverture.

9. Appareil selon la revendication 8, dans lequel la vanne de commutation à plusieurs étages (24) est l'une parmi une servovanne, une vanne à deux étages SMC et une vanne d'étranglement.

10. Appareil selon la revendication 5, dans lequel le dispositif d'évacuation à vide moyen-élevé (30) comprend une pompe d'évacuation à vide moyen-élevé reliée à la chambre à vide (10) par l'intermédiaire du tuyau à vide moyen-élevé (31) et une vanne de commutation de vide moyen-élevé (24) configurée pour ouvrir et fermer le tuyau à vide moyen-élevé (31).

11. Appareil selon la revendication 10, dans lequel la pompe d'évacuation à vide moyen-élevé comprend une pompe sèche (32) et une pompe turbomoléculaire (TMP) (37) reliée à la pompe sèche (32) par le tuyau à vide moyen-élevé (31) et installée dans le tuyau à vide moyen-élevé (31) de manière adjacente à la chambre à vide (10).

12. Appareil selon la revendication 11, dans lequel la vanne de commutation de vide moyen-élevé (24) comprend une vanne marche/arrêt (23) installée dans le tuyau à vide moyen-élevé (31) d'un côté de la pompe sèche (32) et une vanne de contrôle de pression adaptative (APC) (34) installée dans le tuyau à vide moyen-élevé (31) entre la TMP (37) et la chambre à vide (10) et configurée pour réguler un degré d'ouverture.

13. Appareil selon la revendication 12, dans lequel
le tuyau à vide moyen-élevé (31) du côté de la pompe sèche (32) comprend un tuyau de dérivation,
des première et seconde vannes marche/arrêt (23) sont installées respectivement dans le tuyau de dérivation et le tuyau à vide moyen-élevé (31) du côté de la pompe sèche (32), et
la première vanne marche/arrêt (33S) et la seconde vanne marche/arrêt (33F) sont configurées pour être ouvertes séquentiellement.

14. Procédé de séchage sous vide d'une électrode à l'état rouleau à rouleau, le procédé utilisant un appareil selon l'une quelconque des revendications 1 à 13 et comprenant les opérations suivantes :
l'évacuation d'une chambre à vide (10) à un niveau de vide faible selon une condition de traitement définie afin de sécher sous vide une électrode disposée à l'état rouleau à rouleau dans la chambre à vide (10) ; et
le séchage de l'électrode dans la chambre à vide (10) au niveau de vide faible, dans lequel le procédé comprend en outre une opération, après le séchage d'un nombre prédéterminé de rouleaux d'électrodes (1a, 1b, 1c, 1d) à l'état rouleau à rouleau dans la chambre à vide (10), de retrait, après le retrait des électrodes de la chambre à vide (10), de corps étrangers dans la chambre à vide (10) en mettant la chambre à vide (10) à un niveau de vide moyen prédéterminé ou à un niveau de vide élevé prédéterminé ;
dans lequel le niveau de vide moyen prédéterminé ou le niveau de vide élevé prédéterminé est obtenu en évacuant la chambre à vide (10) à un niveau de vide faible, puis en passant progressivement du niveau de vide faible au niveau de vide moyen prédéterminé ou au niveau de vide élevé prédéterminé.

15. Procédé de séchage sous vide d'une électrode à l'état rouleau à rouleau, le procédé utilisant un appareil selon l'une quelconque des revendications 1 à 13 et comprenant les opérations suivantes :
l'évacuation progressive d'une chambre à vide (10) en passant d'un niveau de vide faible à un niveau de vide moyen ou un niveau de vide élevé selon une condition de traitement définie afin de sécher sous vide une électrode (1) disposée dans la chambre à vide (10) à l'état rouleau à rouleau ; et
le séchage de l'électrode (1) dans la chambre à vide (10) au niveau de vide moyen ou au niveau de vide élevé ;
comprenant en outre une opération, après séchage d'un nombre prédéterminé de rouleaux d'électrodes (1a, 1b, 1c, 1d) à l'état rouleau à rouleau dans la chambre à vide (10), de retrait, après retrait des électrodes (1) de la chambre à vide (10), de corps étrangers dans la chambre à vide (10) en mettant la chambre à vide (10) à un niveau de vide moyen prédéterminé ou à un niveau de vide élevé prédéterminé ;
dans lequel le niveau de vide moyen prédéterminé ou le niveau de vide élevé prédéterminé est obtenu en évacuant la chambre à vide (10) à un niveau de vide faible, puis en passant progressivement du niveau de vide faible au niveau de vide moyen prédéterminé ou au niveau de vide élevé prédéterminé.
